# EUROPEAN PATENT APPLICATION

(11) **EP 1 854 365 A1**
(43) Date of publication of application: **14.11.2007**
(21) Application number: 06113755.0
(22) Date of filing: 10.05.2006
(51) Int. Cl.: A23G 9/08, F25B 17/08, F25C 1/16

(54) **A device and a method for production of a frozen dessert**

(71) Applicant: Nestec S.A., 1800 Vevey (CH)
(72) Inventor: Fallay, Patrick, 60650, LE MONT-SAINT-ADRIEN (FR); Cathenaut, Philip Igor, 95440, ECOUEN (FR)
(74) Representative: Elleby, Gudrun

(57) **Abstract**

An apparatus is provided for rapid and spectacular preparation of a frozen dessert by evaporation of an aqueous substance. The apparatus comprises a vacuum chamber for accommodation of a container for the frozen dessert and having a first opening for insertion and removal of the container for the frozen dessert, a second opening for interconnection with a raw material container holding the raw material for the frozen dessert and having an outlet for discharge of raw material and adapted to be removably attached to the second opening of the vacuum chamber, and a nozzle that is positioned for discharge of raw material into the container when the container is attached to the vacuum chamber, and a vacuum pump connected to the vacuum chamber for evacuation of the vacuum chamber and evaporation of water from the raw material and discharge of the raw material into the container.

## Description

### FIELD OF THE INVENTION

The present invention relates to a device and a method for preparation of a frozen dessert, in particular a rapid and spectacular preparation of a frozen dessert, such as premium ice cream, standard ice cream, mousse, etc.

### BACKGROUND OF THE INVENTION

In US 2005/0061022 it is suggested to prepare an ice cream by rapid solidification of ice cream raw material, which constitutes an aqueous substance, by evaporation of water from the substance and adsorption of the evaporated water vapour by an adsorption agent under vacuum.

Methods and devices for the cooling of aqueous liquids according to the evaporation principle are known. By evaporation of water vapour, an aqueous liquid is brought to evaporation and thereby cooled. In order to cool aqueous liquids to temperatures close to the solidification point, considerable water vapour volumes must be evaporated.

US 2005/0061022 discloses an economical method and device for the simple and rapid solidification of aqueous substances under vacuum wherein the water vapour is removed by adsorption of water in an adsorption agent contained in an adsorption device. The water is adsorbed with the release of heat (sorption phase). After the adsorption agent is saturated, it can once again be desorbed by the supply of heat at a higher temperature (desorption phase). The adsorbed water thereby evaporates from the adsorption agent.

The method disclosed in US 2005/0061022 permits the cooling and solidification of an aqueous substance within a very short time. The quantity of solidified substance can attain several kilograms per minute without expensive technology and without time-consuming preparations.

A simultaneous and expensive removal of heat from the adsorption agent is not necessary since the quantity of adsorption agent is dimensioned in such a way that its heat capacity is sufficient to buffer heat released during the adsorption to such an extent that the adsorption reaction is still sufficiently far from its thermodynamic equilibrium point. The solidification takes place within a few seconds as a function of the flow conditions of the water vapour. The adsorption agent quantity is so large that the provided substance quantity can be solidified only once or be a multiple thereof. In the latter case, however, the adsorption agent should also be able to release heat from time to time.

Adsorption devices for cooling with solid adsorption agents are known from EP 0 368 111 and DE-OS 34 25 419. Adsorption agent containers filled with adsorption agent remove the working agent vapour that is generated in an evaporator and adsorb it with the release of heat. This adsorption heat must be removed from the used adsorption agent. The cooling devices can be used to cool food and to keep it warm in thermally insulated boxes.

In German Patent DE 4003107, a method for making ice under vacuum with a simultaneous adsorption of the out flowing water vapour in an adsorption agent is described. An aqueous liquid is thereby solidified in a flanged vacuum-tight icing container.

### SUMMARY OF THE INVENTION

It is an object of the present invention to provide a method and an apparatus for rapid and spectacular preparation of a frozen dessert, such as an ice cream, mousse, etc, that allows the preparation process to be watched by consumers, and that facilitates convenient and hygienic operation by an operator that need no special education nor training for operating the apparatus.

It is a further object of the present invention to provide an apparatus that requires a minimum of cleaning between preparations of individual frozen desserts while fulfilling every hygienic requirement for the preparation of human food.

According to a first aspect of the invention, the above-mentioned and other objects are fulfilled by a method for production of a frozen dessert by solidification of aqueous raw material for the frozen dessert by evaporation of water from the raw material, the method comprising the steps of
inserting a container for the frozen dessert into a vacuum chamber,
connecting a container with the aqueous raw material to the vacuum chamber,
evacuating the aqueous raw material and an adsorption agent from the surrounding pressure level to a system pressure of below 30 mbar, preferably below 5 mbar, more preferred below 3 mbar, even more preferred below 1 mbar, by means of a vacuum pump connected to the vacuum chamber,
forcing evaporated gases through the adsorption agent with the vacuum pump, wherein the mass of the used adsorption agent is at least half the mass of the water fraction in the substance,
maintaining the solidification process for less than 2 min, wherein the aqueous substance solidifies in the container for the frozen dessert,
subsequently venting the vacuum system, and
removing the frozen dessert with the container for the frozen dessert from the vacuum chamber.

According to a second aspect of the invention, the above-mentioned and other objects are fulfilled by a frozen dessert making apparatus for production of frozen dessert by solidification of aqueous raw material for the frozen dessert by evaporation of water from the raw material. The apparatus according to the invention comprises a vacuum chamber for accommodation of a container for the frozen dessert on a support and having a first opening for insertion and removal of the container for the frozen dessert, a second opening for interconnection with a raw material container holding the raw material for the frozen dessert. The raw material container has an outlet for discharge of raw material and adapted to be removably attached to the second opening of the vacuum chamber, and a nozzle that is positioned for discharge of raw material into the container when the container is attached to the vacuum chamber. Further, the apparatus comprises a vacuum pump connected to the vacuum chamber for evacuation of the vacuum chamber and evaporation of water from the raw material and discharge of the raw material into the container.

The apparatus facilitates easy insertion of the frozen dessert container into the vacuum chamber before preparation of the desired dessert, and easy removal of the frozen dessert container with the finished dessert, preferably ready to be served in the container. This makes the apparatus suitable for use in a frozen dessert shop, e.g. an ice cream shop.

Likewise, the apparatus facilitates easy interconnection of the raw material container with the vacuum chamber before preparation of the desired dessert, and easy removal of the raw material container when desired whereby the vacuum chamber is immediately ready to be used for different types or flavours of frozen dessert. Upon selection of a specific frozen dessert, only the second opening need be opened for connection of the corresponding raw material container with the vacuum chamber.

The raw material container may be provided with a content that constitutes the amount of raw material required to prepare a single dessert, e.g. 100 ml raw material, facilitating individual preparation of various desserts in random order requiring no further changes of the apparatus.

The raw material container may further be provided with an amount of raw material for the preparation of a suitable number of a specific dessert. The actual number may be selected in accordance with typical sales figures whereby the container will be used for a limited time only in accordance with the durability of the raw material and other human food handling requirements.

Preferably, the raw material container is discarded after emptying so that no cleaning of raw material containers will be required.

In a preferred embodiment, the raw material container further comprises a membrane sealing the outlet of the raw material container keeping the raw material sealingly enclosed up until the first time of actual discharge of its content in the frozen dessert making apparatus thereby further improving the hygiene of the process and the durability of the raw material.

The nozzle may also be contained in the raw material container and be discarded together with the raw material container, so that no cleaning of the nozzle is required.

The membrane may be attached to the outlet of the raw material container.

The nozzle may be movable relative to the outlet and shaped to penetrate the membrane when the raw material container is attached to the vacuum chamber.

In another embodiment, the membrane is attached to the nozzle, and the nozzle is movable relative to the outlet, and the outlet is shaped to penetrate the membrane when the raw material container is attached to the vacuum chamber.

The raw material container may be flexible, e.g. the material container may have flexible walls and/or movable walls, whereby the internal volume of the container is reduced upon discharge of content.

In order to be able to remove the evaporated water very quickly maintaining a low pressure in the vacuum chamber, it is preferred to provide an adsorption member for adsorption of water evaporated from the raw material in the apparatus.

In a preferred embodiment of the invention, the adsorption member contains an adsorption agent for adsorption of water evaporated from the raw material.

The handling of the adsorption agent may be facilitated by provision of an adsorption agent cartridge for accommodation of the adsorption agent and that is adapted to be removably positioned in the apparatus whereby the operability of the apparatus is improved. Preferably, the cartridge may be exchanged in less than 1 minute.

In another embodiment of the invention, the adsorption member comprises a cold trap for capturing the water vapour.

The container for the frozen dessert can assume any arbitrary form and be made from any materials. The container may have an absorbent structure for absorbing the aqueous substance so that spraying is suppressed during a rapid evacuation and solidification process.

During the solidification process, a sufficiently large opening is provided for the flow of the water vapour into the adsorption agent.

It may be particularly appropriate to close the container for the frozen dessert airtight after the solidification process and still under vacuum, e.g. for transportation before consumption. For example, the container for the frozen dessert may be made of a flexible, bag-like film material. Under vacuum, it presses close to the shapes of the solidified substance. For longer vacuum periods, it is recommendable to use multilayer film material. Such multilayer films are used in the food industry, for example, as packaging material for ground coffee. Such methods are well-known in the art of vacuum packaging machines.

The nozzle atomizes the aqueous substance into a jet of fine drops directed towards the container for the frozen dessert.

The vacuum chamber may have a rotatable support for positioning of the frozen dessert container for rotation of the frozen dessert container. Further, the chamber may be formed to generate a swivel flow during discharge of the raw material that turns the frozen dessert container on the rotatable support during discharge of the raw material. In this way a frozen dessert is formed with a particularly plane and attractive upper surface.

Preferably, the vacuum pump is capable of quickly lowering the system pressure below the water vapour pressure of the substance to be solidified. A pump with a high suction volume is advantageous if the pumping time is to be kept as short as possible. On the other hand, a small pumping output is sufficient during the solidification process, so as to suction the released non-adsorbable gases from the adsorption substance.

The vacuum pump is preferably adapted to establish an end vacuum of less than 30 mbar, preferably less than 5 mbar, more preferred less than 3 mbar, even more preferred less than 1 mbar, absolute within the vacuum chamber.

Preferably, the apparatus is adapted to prevent discharge of aqueous substance from the raw material container until a vacuum of less than a predetermined threshold value, such as less than 30 mbar, preferably less than 5 mbar, more preferred less than 3 mbar, has been reached so that the content of the container for the frozen dessert is homogenously freezed from start to end of the evaporation.

Preferably, the vacuum system is designed in such a way that the water vapour contacts the adsorption substance uniformly. The fraction of cavities and conduits not filled with the adsorption substance should be as small as possible, so that the desired operating pressure is reached in a short time.

During the adsorption reaction, adsorption heat is released, which heats the adsorption substance. The adsorbing capacity for water decreases significantly at elevated temperatures. In order to maintain a high cooling output over a longer period of time, it is reasonable to cool the adsorption agent by means of suitable cooling devices. In this regard, heat exchangers for air or special cooling water circulations are advantageous. It is also very efficient to place the adsorption container in a water bath. The water heated during the cooling process can be subsequently used to clean the device.

The task of the adsorption agent is to adsorb the water vapour, i.e. to condense and bind the water vapour within the crystal structure. Adsorption agents have only a limited absorption capacity for water molecules. This capacity is exhausted when, despite the running of the vacuum pump, the solidification output declines or even the solidification temperature can no longer be reached. In this case, the adsorption agent must be replaced with a fresh agent or must be regenerated by heat treatment.

Preferably, an adsorption agent cartridge for accommodation of the adsorption agent is provided that is adapted to be removably positioned in the apparatus facilitating easy replacement of saturated adsorption agent with fresh adsorption agent.

Preferably, the adsorption agent is packed in a cartridge with a vapour-permeable housing in such a way that it can be replaced together with the housing. The vapour-permeable housing may be made of expanded metal, wire netting, wire grating, and temperature-stable mesh.

Adsorption agent may be regenerated or desorbed by heat treatment to temperatures between 150° C and 300° C, depending on type of agent.

Preferably, zeolite is used as the adsorption agent. Zeolite can adsorb up to 36 mass% water, reversibly, in its regular crystal structure. Even at relatively high temperatures (above 80° C.) it still has a considerable water vapour adsorption capacity and is therefore particularly suitable for use in accordance with the invention.

Zeolite is a crystalline mineral consisting of a regular lattice structure of silicon and aluminium oxides. This lattice structure contains cavities into which water molecules can be adsorbed with the release of heat. Within the lattice structure, the water molecules are exposed to great field forces, whose strength depends on the water quantity already contained in the lattice structure and on the temperature of the zeolite. For practical use, up to 25 grams of water can be adsorbed per 100 grams of zeolite. Zeolites are solid substances without a disturbing volume expansion during the adsorption or desorption reaction. The lattice structure is accessible from all sides by the water vapour molecules. As a result of the rapid adsorption reaction involved, they are particularly suitable for use in accordance with the invention.

For an economical mode of operation, zeolite temperatures of 250 to 350° C during regeneration and of 50 to 120° C during adsorption are recommended. It is particularly advantageous to carry out the regeneration during a hot air flow at air temperatures above 300° C. If the zeolite filling is located in a thin layer, the regeneration can be performed within a few minutes.

In order to guarantee uniform adsorption within the loaded adsorption agent and a low pressure loss, adsorption agent granules have proven particularly effective. Granule diameters between 3 and 5 mm exhibit the best results.

"Aqueous substances" refers to substances that contain at least enough water to be able to lower the remaining substance to the desired temperature level during the complete evaporation of the water quantity. Examples of liquids in accordance with the invention are water, salt water, juices, soft drinks, coffee, tea, milk, and milk products, such as ice cream mixtures. Also, liquids enriched with more readily volatile substances, such as carbonic acid, alcohol, or aromatic substances, fall under this designation, although they are less suitable for direct cooling because of the parallel evaporation of more readily volatile admixtures. By using vacuum pumps with a strong suction, these readily volatile substances, however, can be suctioned through the adsorption agent.

For maximum efficiency, the adsorption agent must be able to transfer its adsorption heat to the surroundings, for example between several solidification processes. A particularly intensive cooling effect is attained if the adsorbent container has a sufficiently large heat exchange surface for the surrounding air flow. Preferably, the adsorption agent can be cooled to the ambient temperature, in order to be able to adsorb the largest possible quantity of water vapour. Solid adsorption agents have, however, low thermal conduction and poor heat transfer. Since the heat transfer of an air flow to the adsorption-agent heat exchanger is on the same order of magnitude, heat exchangers without fins are recommended, in principle, such as cylindrical, plate-shaped or tubular configurations. Since, in particular, zeolite granules have a low thermal conductivity; the adsorption containers must be designed in such a way that the average heat conduction path for the converted water quantities does not exceed 5 cm.

In a preferred embodiment of the invention, a new adsorption cartridge is used for each solidification process whereby a separate heat exchanger is not necessary, since the heat released in the adsorption agent is released outside the vacuum system via the cartridge housing wall.

Other adsorption agents, which adsorb water vapour and remain solid during the adsorption reaction, however, can also be used. Some solid adsorption agents, such as molecular sieves, are stable enough to be able to support even thin container walls against excess external pressure without a change in volume. Additional rigid structures or thick-walled heat exchanger surfaces are therefore not necessary.

In one embodiment, the cartridge containing the adsorption agent has thermal insulation in order to minimize the heat loss to the surroundings during the desorption process.

The support for the container for the frozen dessert may be movable in a vertical direction for adjustment of the distance between the container and the nozzle. The vertical movement may be provided by an electrically driven motor in the vacuum chamber operating to rotate a threaded rod carrying the support in the vacuum chamber. The vertical distance between the container for the frozen dessert and the nozzle may be adjusted for provision of an optimum frozen dessert product shape during freezing by evacuation.

Thus, the electrically driven motor may be operated to rotate and lift or lower the container for the frozen dessert within the vacuum chamber relative to the nozzle. This is also spectacular to watch for the customer.

Additionally, the lifting movement may also be used for the penetration of the membrane of the raw material container.

The support in the vacuum chamber may be movable for mixing of the content of the frozen dessert container by movement of the support during evaporation, such as by vibration, rotation, etc.

It may further be of interest to rotate and mix the solidified substance by means of stirrers. By means of foam-sweeping devices, it is also possible to suppress undesired foaming of the aqueous substances.

Preferably, the adsorption member has a cubical shape for maximum surface contact area between the adsorption agent and the evaporated water vapour per volume of adsorption agent.

A shield, such as a shield shaped like an umbrella, may be provided to avoid contaminations of the vacuum chamber walls due to possible splashing inside the vacuum chamber. The shield may be a lid on top of the container for the frozen dessert, or the shield may be a decorative element that stays with the container for the frozen dessert when it is passed on to the consumer of the dessert.

The shield may further have a container for ingredients for the dessert, such as nuts, crisps, etc, for example fixed between foils.

### BRIEF DESCRIPTION OF THE DRAWINGS

The above and other features and advantages of the present invention will become more apparent to those of ordinary skill in the art by describing in detail exemplary embodiments thereof with reference to the attached drawings in which:
- Fig. 1: shows a schematic cross-section of a preferred embodiment of the invention,
- Fig. 2: is a more detailed illustration of the vacuum chamber and the raw material container of the embodiment shown in Fig. 1,
- Fig. 3: shows the spray nozzle, and
- Fig. 4: shows a regeneration station for the adsorption agent.

### DETAILED DESCRIPTION OF THE PREFERRED EMBODIMENTS

The present invention will now be described more fully hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

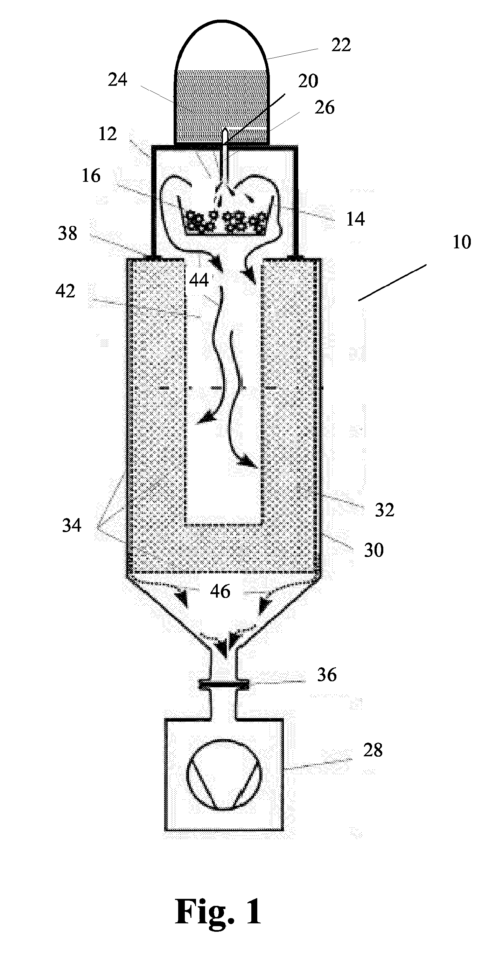

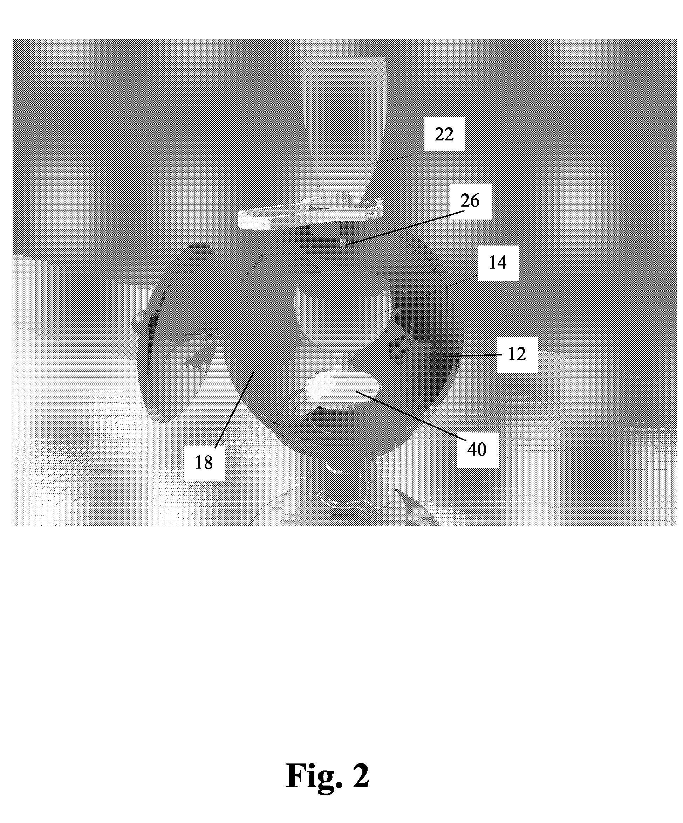

Fig. 1 is a schematic illustration of the basic components of a frozen dessert making apparatus 10 according to the present invention. Fig. 2 illustrates the top parts of the embodiment of Fig. 1 in more detail. As shown in Figs. 1 and 2, the illustrated embodiment 10 comprises a vacuum chamber 12 for accommodation of a container 14 for the frozen dessert 16 and having a first opening 18 for insertion and removal of the container 14 for the frozen dessert, a second opening 20 for interconnection with a raw material container 22 holding the raw material 24 for the frozen dessert 16. The raw material container 22 has an outlet for discharge of raw material 24 and adapted to be removably attached to the vacuum chamber 12 at the second opening 20. A nozzle 26 is positioned for discharge of raw material 24 into the container 14 when the container 14 is positioned in the vacuum chamber 12.

Further, the apparatus comprises a vacuum pump 28 connected to the vacuum chamber 12 through an adsorption agent cartridge 30 for evacuation of the vacuum chamber 12 and evaporation of water from the raw material 24 and discharge of the raw material 24 into the container 14. The adsorption agent cartridge 30 contains an adsorption agent 32, preferably zeolite as mentioned above, embedded in a metallic perforated sheet housing 34 for the unhindered acceptance of water vapour in order to be able to remove the evaporated water very quickly maintaining a low pressure in the vacuum chamber 12. The adsorption agent cartridge 30 constitutes a cartridge for accommodation of the adsorption agent 32 and that is adapted to be removably positioned in the apparatus 10 facilitating operation of the apparatus 10. In the illustrated embodiment, the cartridge may be exchanged in less than 1 minute. A new adsorption cartridge may be used for each solidification process, or, cartridges may be provided with an amount of adsorption agent suitable for production of e.g. 5, 10, 20 or more desserts.

The vacuum chamber 12 is transparent and contains a transparent container 14 for the frozen dessert 16 into which the aqueous substance 24 is sprayed from the nozzle 26.

By a momentary evaporation of water from the aqueous substance 24, a foam-like solidified substance 16 is formed.

The apparatus 10 facilitates easy insertion of the frozen dessert container 14 into the vacuum chamber 12 before preparation of the desired dessert 16, and easy removal of the frozen dessert container 14 with the finished dessert 16, preferably ready to be served in the container 14. This makes the apparatus suitable for use in a frozen dessert shop, e.g. an ice cream shop.

Likewise, the apparatus 10 facilitates easy interconnection of the raw material container 22 with the vacuum chamber 12 before preparation of the desired dessert 16, and easy removal of the raw material container 22 when desired whereby the vacuum chamber 12 is immediately ready to be used for different types or flavours of frozen dessert 16. Upon selection of a specific frozen dessert 16, only the second opening 20 need be opened for connection of the corresponding raw material container 22 with the vacuum chamber 12.

The raw material container 22 may be provided with a content that constitutes the amount of raw material 24 required to prepare a single dessert, e.g. 100 ml raw material 24, facilitating individual preparation of various desserts in random order requiring no further changes of the apparatus.

The raw material container 22 may further be provided with an amount of raw material 24 for the preparation of a suitable number of a specific dessert. The actual number may be selected in accordance with typical sales figures whereby the container will be used for a limited time only in accordance with the durability of the raw material 24 and other human food handling requirements.

Preferably, the raw material container 22 is discarded after emptying so that no cleaning of raw material containers 22 will be required.

The illustrated raw material container 22 is a pouch with flexible walls so that the internal volume of the container 22 is reduced upon discharge of content.

The nozzle 26 atomizes the aqueous substance into a jet of fine drops directed towards the container 14 for the frozen dessert.

The vacuum chamber 12 has a rotatable support 40 for positioning of the frozen dessert container 14 for rotation of the frozen dessert container 14. Further, the nozzle 26 may be formed to generate a swivel flow during discharge of the raw material 24. The swivel flow turns the frozen dessert container 14 on the rotatable support 40 during discharge of the raw material 24. In this way a frozen dessert is formed with a particularly plane and attractive upper surface.

The support 40 for the container 14 for the frozen dessert 16 may be movable in a vertical direction for adjustment of the distance between the container 14 and the nozzle 26. The vertical movement may be provided by an electrically driven motor in the vacuum chamber 12 operating to rotate a threaded rod carrying the support 40 in the vacuum chamber 12. The vertical distance between the container 14 for the frozen dessert and the nozzle 26 may be adjusted for provision of an optimum frozen dessert product shape during freezing by evacuation.

Thus, the electrically driven motor may be operated to rotate and lift or lower the container 14 for the frozen dessert within the vacuum chamber 12 relative to the nozzle 26. This is also spectacular to watch for the customer.

Additionally, the lifting movement may also be used for the penetration of the membrane of the raw material container 22.

During operation of the apparatus 10 illustrated in Fig. 1, in accordance with the invention, the container 14 for the frozen dessert 16 is inserted into the vacuum chamber 12, which is connected by a vacuum-tight connection with the adsorption agent cartridge 30. The vacuum pump 28 is started and suctions gas from the vacuum system through the adsorption agent 32. The interior pressure drops very quickly to less than 5 mbar (abs.), which is an adequate pressure for evaporation of the aqueous substance 24, for example, a finished mixture for the preparation of ice cream, through the nozzle 26. By the sudden evaporation in the vacuum system, the substance 24 solidifies to form a foam-like ice structure 16. The water vapour flows via the interior channel 42 along the vapour arrows 44 into the adsorption agent 32. Here, the vapour is momentarily adsorbed and embedded into the cavity structure of the adsorption agent 32. Only non-adsorbable gases are suctioned by the vacuum pump 28 through the adsorption agent 32 along the arrows 46. The quantity of the adsorption agent 32 is dimensioned in such a way that in spite of the temperature increase, water vapour is sufficiently evaporated from the substance to be solidified and can be adsorbed by the adsorption agent 32. Having produced solidified substance 16 of a desired amount, the vacuum pump 28 is turned off; and a venting valve (not shown) is opened. After venting, the vacuum chamber 12 can be opened and the container 14 with the frozen dessert 16 can be removed. Then, with loading of sufficiently dimensioned adsorption agent 32, the next solidification process can be initiated, without any waiting time.

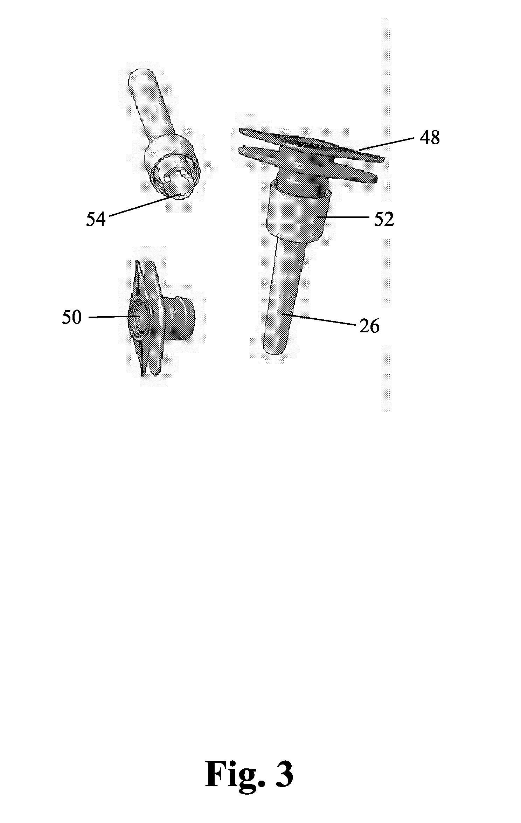

Fig. 3 shows the nozzle 26 in more detail from various angles. A flange member 48 is adapted to be sealingly attached to the raw material container 22 in its output opening. The flange member 48 has a membrane 50 so that the raw material container 22 is sealed with the flange member 48. The flange member 48 and the nozzle 26 are interconnected with a snap fit coupling 52 that allows the nozzle 26 to move relative to the flange member 48 along its longitudinal extension in response to a force applied in the direction of its longitudinal extension. Nozzle displacement towards the flange member results in penetration of the membrane 50 by the nozzle edge 54. Preferably, the raw material container 22 is delivered with the nozzle 26 attached to the flange member 48. Further, the nozzle 26 is preferably discarded together with the raw material container 22 when it is empty. The snap fit coupling is adapted for displacement of the nozzle when the internal pressure in the vacuum chamber 12 has reached 5 mbar or less so that spraying starts at the low pressure freezing the raw material from the very start of spraying.

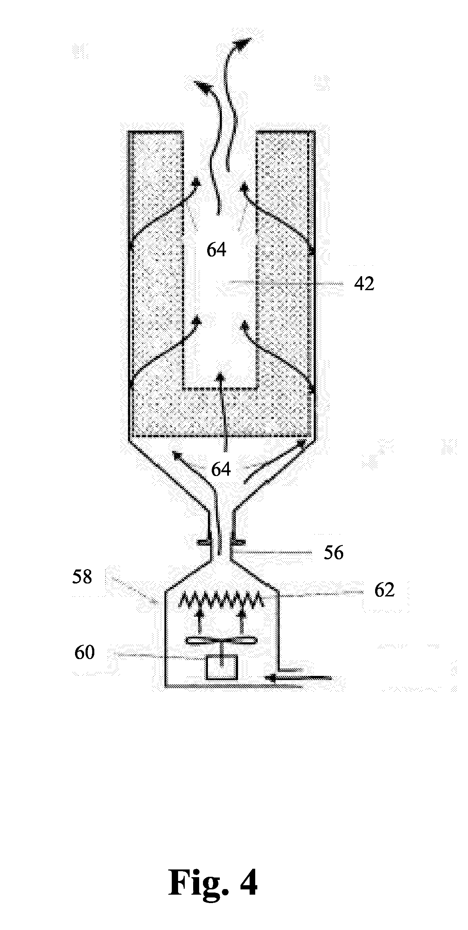

In order to regenerate saturated adsorption agent 32 within the adsorption agent cartridge 30, the adsorption agent cartridge 30 can be separated from the apparatus 10 at connection sites 36, 38, and placed on the connection pieces 56 of the regeneration unit 58 shown in Fig. 4. By means of the blower 60 and the electrical heating device 62, hot air of at least 200° C is pressed through the adsorption agent 32 in the reverse flow direction 64. The hot air heats the adsorption agent 32 and transports the desorbed water vapour from the adsorption cartridge 30. Regeneration is concluded when the water vapour flow from the adsorption agent 32 ceases and/or the temperature of the adsorption agent 32 is equal to the hot air temperature. After cooling of the adsorption agent 32, the adsorption agent cartridge 30 can again be integrated with the remaining apparatus 10.

Adsorption agent 32 may be regenerated or desorbed by heat treatment to temperatures between 150° C and 300° C, depending on type of agent.

## Claims

1. A frozen dessert making apparatus for production of frozen dessert by solidification of aqueous raw material for the frozen dessert by evaporation of water from the raw material, the apparatus comprising
a vacuum chamber for accommodation of a container for the frozen dessert on a support and having
a first opening for insertion and removal of the container for the frozen dessert,
a second opening for interconnection with
a raw material container holding the raw material for the frozen dessert and having
an outlet for discharge of raw material and adapted to be removably attached to the second opening of the vacuum chamber, and
a nozzle that is positioned for discharge of raw material into the container when
the container is attached to the vacuum chamber, and
a vacuum pump connected to the vacuum chamber for evacuation of the vacuum chamber and evaporation of water from the raw material and discharge of the raw material into the container.

2. A frozen dessert making apparatus according to claim 1, wherein the raw material container further comprises a membrane sealing the outlet of the raw material container.

3. A frozen dessert making apparatus according to claim 2, wherein the membrane is attached to the outlet of the raw material container, and the nozzle is movable relative to the outlet and shaped to penetrate the membrane when the raw material container is attached to the vacuum chamber.

4. A frozen dessert making apparatus according to claim 2, wherein the membrane is attached to the nozzle and the nozzle is movable relative to the outlet and the outlet is shaped to penetrate the membrane when the raw material container is attached to the vacuum chamber.

5. A frozen dessert making apparatus according to any of the previous claims, further comprising an adsorption member with an adsorption agent for adsorption of water evaporated from the raw material.

6. A frozen dessert making apparatus according to any of the previous claims, wherein the vacuum pump is adapted to establish an end vacuum of less than 30 mbar, preferably less than 5 mbar, more preferred less than 3 mbar, even more preferred less than 1 mbar, absolute within the vacuum chamber.

7. A frozen dessert making apparatus according to any of the previous claims, adapted to prevent discharge of aqueous substance from the raw material container until a vacuum of less than a predetermined threshold value has been reached.

8. A frozen dessert making apparatus according to any of the previous claims, wherein the support in the vacuum chamber is movable for mixing of the content of the frozen dessert container by movement of the support during evaporation.

9. A frozen dessert making apparatus according to any of the previous claims, wherein the support in the vacuum chamber is adjustable for adjustment of the distance between the nozzle and the frozen dessert.

10. A frozen dessert making apparatus according to any of the previous claims, wherein the support in the vacuum chamber is rotatable for rotation of the frozen dessert container during evaporation.

11. A frozen dessert making apparatus according to any of the previous claims, further comprising a shield positioned in the vacuum chamber for shielding the frozen dessert container from excess sprayed particles.

12. A method for production of a frozen dessert by solidification of aqueous raw material for the frozen dessert by evaporation of water from the raw material, the method comprising the steps of
inserting a container for the frozen dessert into a vacuum chamber,
connecting a container with the aqueous raw material to the vacuum chamber,
evacuating the aqueous raw material and an adsorption agent from the surrounding pressure level to a system pressure of below 30 mbar, preferably below 5 mbar, more preferred below 3 mbar, even more preferred below 1 mbar, by means of a vacuum pump connected to the vacuum chamber,
suctioning non-adsorbable gases through the adsorption agent with the vacuum pump, wherein the mass of the used adsorption agent is at least half the mass of the water fraction in the substance,
attaining the solidification process in less than 2 min, wherein the aqueous substance solidifies in the container for the frozen dessert,
subsequently venting the vacuum system; and
removing the frozen dessert with the container for the frozen dessert from the vacuum chamber.
